# EUROPEAN PATENT SPECIFICATION

(11) **EP 1 941 822 B1**
(45) Date of publication and mention of the grant of the patent: **05.09.2012**
(21) Application number: 06812009.6
(22) Date of filing: 19.10.2006
(51) Int. Cl.: A47L 9/28

(54) **ELECTRIC CLEANER**
ELEKTRISCHE REINIGUNGSVORRICHTUNG
SYSTEME DE NETTOYAGE ELECTRIQUE

(30) Priority: 25.10.2005 JP 2005309370
(43) Date of publication of application: 09.07.2008
(73) Proprietor: Panasonic Corporation, Kadoma-shi Osaka 571-8501 (JP)
(72) Inventor: Senoo, Hiroyuki, Osaka-Shi,Osaka,540-6207 (JP); Ishibashi, Takafumi, Osaka-Shi,Osaka,540-6207 (JP); Ohshima Yasuo, Osaka-Shi,Osaka,540-6207 (JP); Ueno, Seiichi, Osaka-Shi,Osaka,540-6207 (JP); Itoh, Akihito, Osaka-Shi,Osaka,540-6207 (JP)
(74) Representative: Pautex Schneider, Nicole Véronique
(86) International application number: PCT/JP2006/320821
(87) International publication number: WO 2007/049497

(56) References cited:
- EP-A1- 0 397 205
- DE-A1- 4 425 291
- JP-A- 02 180 236
- JP-A- 07 051 203
- JP-A- 2001 128 912
- JP-A- 2003 169 770
- JP-A- 2004 290 342
- JP-U- 61 092 357
- US-A- 5 323 483

## Description

### TECHNICAL FIELD

The present invention relates to electric vacuum cleaners for household use.

### BACKGROUND ART

In recent years, there have been proposed vacuum cleaners with various features. One such feature is to control the electric blower by detecting the amount of dust using a dust sensor disposed in an air passage through which dust is collected (see, for example, Examined Japanese Patent Publication No. H07-28847 and Japanese Patent No. 3006145).

In the conventional electric vacuum cleaners, the number and the sizes of dusts are determined by the number of pulses and the pulse width, respectively, of a detection signal. However, the sizes of the detectable dusts are found to be limited by the circuit characteristics of the pulse converter which detects the size of the dust from the pulse width.

The reasons of the limitation are as follows. For one thing, house dusts which can be collected by a vacuum cleaner have a difference in area of several thousand times. Therefore, when the characteristics of the detection circuit (especially the amplification factor and frequency characteristics of the detection signal) are adjusted to small dusts, the number of pulses of the signal cah be detected but the pulse width is difficult to determine with respect to large dusts. In contrast, when the characteristics of the detection circuit are adjusted to large dusts, it is difficult to detect reaction with respect to small dusts.

For another, dust is detected while it is suctioned at the same speed as the air is flown, so that the sizes of dusts far smaller than the detection part cannot be determined as pulse widths. The transit time of dust is expressed by (X + Y)/Z where X is the diameter of a spherical body corresponding to the dust, Y is the diameter of a circle corresponding to the size of the light receiver of the detection part, and Z is the transit speed of the dust, which is approximately equal to the air intake speed. When X << Y, the transit time of the dust is Y/Z in which the size of the dust hardly affects the transit time. On the other hand, when the dust has a certain degree of size with respect to the size of the detection part, the transit time is greatly affected by X, that is, the size of the dust. In addition, the transit speed tends to be delayed with respect to the air intake speed. This makes it possible to determine the size of the dust by the pulse width as in the above-described prior art. Thus the conventional electric vacuum cleaners control dust by adjusting the characteristics of the detection circuit only to the dusts having a certain degree of size. This means that the conventional electric vacuum cleaners cannot efficiently control dusts of sizes other than the size to which the characteristics of the detection circuit have been adjusted.

European publication EP 0397 205 A1 relates to a vacuum cleaner wherein an input power may be controlled in accordance with a pulse width indicative of dust particle size.

### SUMMARY OF THE INVENTION

In view of the above-described problems, the present invention has an object of providing an electric vacuum cleaner capable of controlling dusts of different sizes with high accuracy.

The electric vacuum cleaner of the present invention is defined in the appended claims and includes an electric blower; a driver for driving the electric blower; a determination controller for controlling electric power supply to the electric blower by transmitting a signal to the driver; and a dust amount sensor for sensing the amounts of dusts of different sizes, wherein the determination controller controls the electric power supply to the electric blower based on the amounts of dusts of the different sizes detected by the dust amount sensor.

In this structure, the dust sensor senses the amounts of dusts of different sizes, and the determination controller controls the electric power supply to the electric blower based on the sensed result. As a result, the electric vacuum cleaner can control dusts of different sizes with high accuracy.

The electric vacuum cleaner further includes: a first dust detector for detecting dust of a predetermined size in a suction passage; and a second dust detector for detecting dust smaller than the predetermined size in the suction passage, wherein the dust amount sensor senses the amounts of dusts of the different sizes based on the detection results of the first dust detector and the second dust detector.

In this structure, dust of a predetermined size and dust smaller than the predetermined size are separately detected, and the power supply to the electric blower is controlled based on the detected result. As a result, the electric vacuum cleaner can detect and control dust with high accuracy.

The determination controller may control the electric power supply to the electric blower based on a table containing the amounts of dusts of the different sizes detected by the dust amount sensor and the correspondence between the amounts of dusts and the electric power supply to the electric blower.

This structure can speed up the dust control by previously determining the correspondence between the amounts of dusts and the electric power supply to the electric blower.

The determination controller may compare electric power supplies corresponding to the amounts of dusts of the different sizes, and determine the larger of the electric power supplies as an electric power supply to be supplied to the electric blower.

This structure ensures the suction of dust.

The electric vacuum cleaner further includes: a dust sensor for sensing dust in the suction passage and outputting a signal, wherein the first dust detector may include a first amplifier-determiner for amplifying a signal outputted from the dust sensor by a first amplification factor, and when the magnitude of the signal amplified is greater than a predetermined threshold, determining that the dust of the predetermined size has been detected; and the second dust detector may include a second amplifier-determiner for amplifying a signal outputted from the dust sensor by a second amplification factor, and when the magnitude of the signal amplified is greater than the predetermined threshold, determining that dust smaller than the predetermined size has been detected, and the second amplification factor may be larger than the first amplification factor.

This structure can distinguish the sizes of dusts by the difference in the amplification factors, making it possible to distinguish dusts that do not have a sufficient difference in pulse width because of having the same transit speed at the light emitter and receiver.

The dust amount sensor may sense the amounts of dusts of the different sizes by counting the results of the first dust detector and the second dust detector.

This structure ensures the detection of the amounts of dusts of the different sizes.

The first dust detector and the second dust detector may output voltages different from each other when detect dust, and the dust amount sensor may sense the amounts of dusts of the different sizes based on the difference in output voltages of the first dust detector and the second dust detector.

This structure also ensures the detection of the amounts of dusts of the different sizes.

The electric vacuum cleaner may further include: a dust signal superimposer for superimposing the outputs of the first dust detector and the second dust detector; and a dust signal separator for separating the signals superimposed by the dust signal superimposer.

This structure increases the amount of information on communication between the dust signal superimposer and the dust signal separator.

The electric vacuum cleaner may further include a dust amount indicator, wherein the determination controller may determine the amount of dust collected with the consideration of the size of the dust collected, based on the amounts of dusts of the different sizes and the dust amount indicator may inform the user of the amount of dust collected determined by the determination controller.

This structure determines the amount of dust collected with the consideration of its size and informs the user of the amount of dust collected, making the electric vacuum cleaner more user friendly.

The electric vacuum cleaner may further include an accumulation clear part for resetting the amount of dust collected.

This structure allows the user to reset the amount of dust collected at a desired timing.

The accumulation clear part may reset the amount of dust collected when the dust bag is replaced.

This structure allows the user to automatically reset the amount of dust collected by replacing the dust bag.

The electric vacuum cleaner may further include a detection indicator for informing the user of the amounts of dusts of the different sizes detected by the dust amount sensor.

This structure allows the user to know the sizes and amounts of dusts collected, making the electric vacuum cleaner more user friendly.

The determination controller may determine at least one of power control law of the electric blower and notification control law of the detection indicator based on the amounts of dusts of the different sizes.

This structure determines the level of the power to be supplied to the electric blower and the level of notification to be provided to the user according to the sizes and amounts of the dusts, making electric vacuum cleaner more user friendly.

The electric vacuum cleaner may further include a setting input part for setting at least one of the power control law and the notification control law.

This structure allows the user to set the level of notification to be provided to the user about the size and amount of dust in the object to be cleaned, and the level of the power to be supplied to the electric blower, making the electric vacuum cleaner more user friendly.

The electric vacuum cleaner may further include a suction tool identification part for identifying the type of a connected suction tool, wherein the determination controller may determine the at least one of the power control law and the notification control law based on the type of the suction tool.

In this structure, when the suction tool for a specific purpose or a specific object to be cleaned is attached to the electric vacuum cleaner, the notification level and the power level are automatically optimized according to the purpose or object to be cleaned, making the electric vacuum cleaner more user friendly.

The suction tool identification part may identify the type of the connected suction tool from the potential difference caused by supplying a predetermined current in accordance with a resistance value different depending on the type of the suction tool.

This structure ensures the identification of the type of the suction tool.

### BRIEF DESCRIPTION OF PREFERRED EMBODIMENTS

Fig. 1 is a perspective view of the appearance of electric vacuum cleaners according to embodiments of the present invention.
Fig. 2 is a schematic sectional view of the electric vacuum cleaners.
Fig. 3 is a schematic sectional view of a dust detector of the electric vacuum cleaners.
Fig. 4 is a block diagram of the control system of an electric vacuum cleaner according to a first embodiment of the present invention.
Fig. 5 is a flowchart showing an example of a dust detection signal processing of the electric vacuum cleaner.
Fig. 6 is a block diagram showing the control system of an electric vacuum cleaner according to a second embodiment of the present invention.
Fig. 7 is a flowchart showing an example of the dust detection signal processing of the electric vacuum cleaner.
Fig. 8 is a block diagram showing the control system of another electric vacuum cleaner of the second embodiment of the present invention.
Fig. 9 is a flowchart showing an example of the dust detection signal processing of the electric vacuum cleaner.

### REFERENCE MARKS IN THE DRAWINGS

- 1: (electric vacuum cleaner) body
- 2: electric blower
- 3: hase
- 4: operating part
- 5: dust bag
- 6: dust chamber
- 7: dust detector
- 8: driver
- 9: determination controller
- 10: first dust detector
- 11: second dust detector
- 12: dust sensor
- 13: first dust counter
- 14: second dust counter
- 15, 30, 31: dust amount sensor
- 16: first voltage detector
- 17: second voltage detector
- 18: dust signal superimposer
- 19: dust signal separator
- 20: detection indicator
- 21: dust amount indicator
- 22: accumulation clear input part (accumulation clear part)
- 23: setting input part
- 24: suction tool identification part
- 25: suction tool setting part
- 26, 32: first amplifier-determiner
- 27, 33: second amplifier-determiner
- 28: light emitter
- 29: light receiver
- 50, 60, 70: electric vacuum cleaner

### DETAILED DESCRIPTION OF PREFERRED EMBODIMENTS

Embodiments of the present invention are described as follows with reference to drawings. Note that the present invention is not limited to these embodiments.

### FIRST EMBODIMENT

A first embodiment of the present invention is described as follows with reference to drawings.

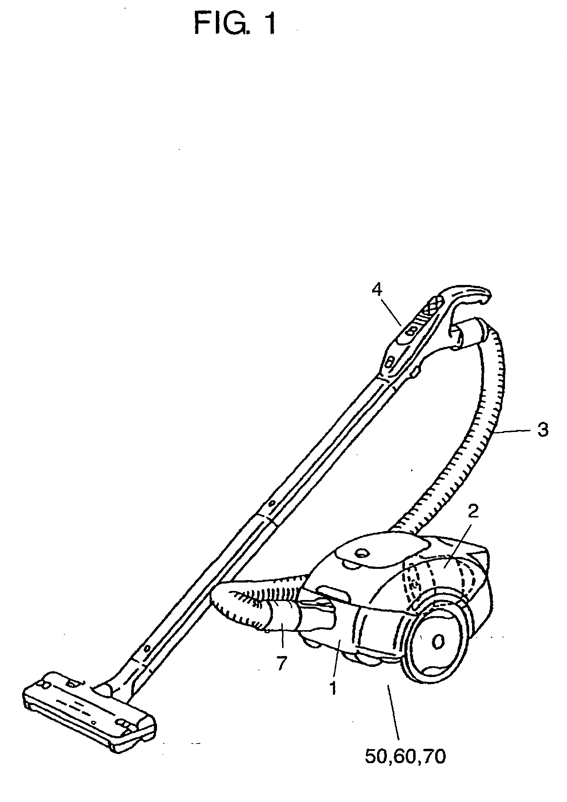

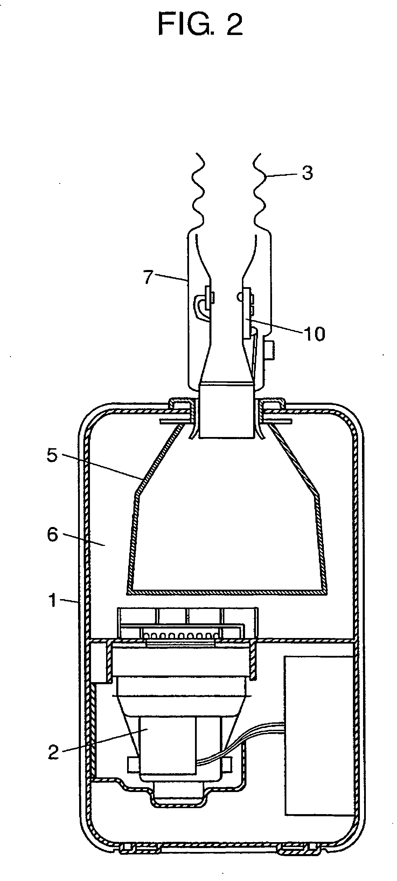

Fig. 1 is a perspective view of the appearance of an electric vacuum cleaner 50 60 70 according to the embodiments of the present invention. Fig. 2 is a schematic sectional view of the electric vacuum cleaner 50 60 70. Electric vacuum cleaner body 1 (hereinafter, body 1) houses electric blower 2 for generating suction power. Body 1 is connected to hose 3 having operating part 4 to be operated by the user. Body 1 further includes dust chamber 6 including dust bag 5.

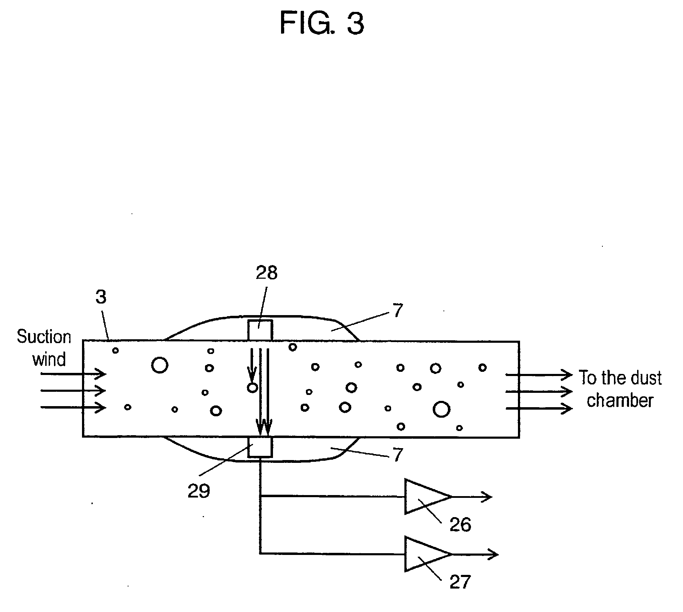

Hose 3 includes dust detector 7 having first dust detector 10 and second dust detector 11 which will be described later. Fig. 3 is a schematic sectional view of dust detector 7 of the electric vacuum cleaners 50, 60, and 70.

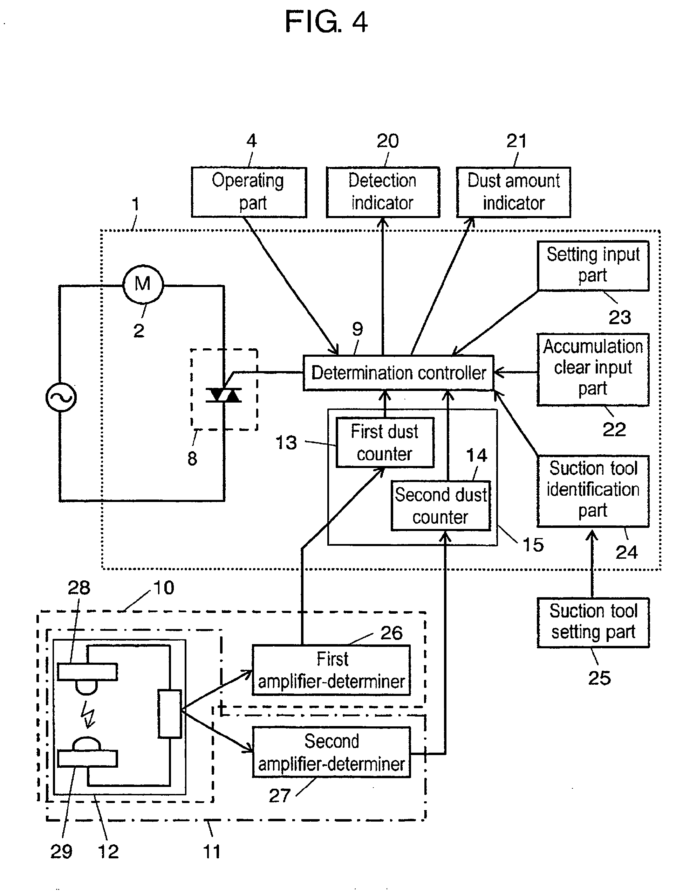

Fig. 4 is a block diagram of the control system of electric vacuum cleaner 50 according to a first embodiment of the present invention. Body 1 includes driver 8 and determination controller 9. Driver 8 has a bidirectional thyristor or the like for driving electric blower 2. Determination controller 9 is composed of a microcomputer or the like. Determination controller 9 receives an operation signal from operating part 4 and in response transmits a driving signal to driver 8.

Dust detector 7 includes first dust detector 10 and second dust detector 11 as mentioned above. First dust detector 10 includes dust sensor 12 and first amplifier-determiner 26. Dust sensor 12 includes light emitter 28 having an infrared-emitting diode and light receiver 29 having a phototransistor. First amplifier-determiner 26 is composed of an operational amplifier or a comparator with the functions of amplifying and filtering a signal outputted from dust sensor 12. First amplifier-determiner 26 determines a detection signal by a predetermined first amplification factor and outputting the detection signal. Second dust detector 11 includes second amplifier-determiner 27 for determining a detection signal by a second amplification factor greater than the first amplification factor and outputting the detection signal.

In the present embodiment, the detected results of first amplifier-determiner 26 of first dust detector 10, and second amplifier-determiner 27 of second dust detector 11 are transmitted to determination controller 9 by using a means for converting the detected results into a pulse signal and for counting the number of pulses.

Body 1 includes dust amount sensor 15 for receiving the detection signals of first dust detector 10 and second dust detector 11 and for providing determination controller 9 with the information of the amount of dust that can be determined by determination controller 9. More specifically, dust amount sensor 15 includes first dust counter 13 and second dust counter 14. First dust counter 13 counts the amount of dust in response to the detection signal of first dust detector 10. Second dust counter 14 counts the amount of dust in response to the detection signal of second dust detector 11.

Electric vacuum cleaner 50 of the present embodiment includes detection indicator 20 made of an LED or the like. Detection indicator 20 informs the user of the detected condition of dust (for example, the amount of dust for each size) based on the signal received from determination controller 9.

Electric vacuum cleaner 50 further includes dust amount indicator 21 made of an LED or the like. Dust amount indicator 21 displays the amount of dust collected in dust bag 5 in response to a signal of determination controller 9 so as to inform the user of it.

Electric vacuum cleaner 50 further includes an accumulation clear input part 22, which is an accumulation clear part composed of a switch or the like. Accumulation clear input part 22 resets (brings back to zero) the amount of dust collected, which is determined by determination controller 9, when dust bag 5 is replaced. Determination controller 9 provides an input to accumulation clear input part 22 so as to reset the amount of dust collected and to restart to determine the amount of dust collected.

Electric vacuum cleaner 50 further includes a setting input part 23 made of a slide switch or the like. Setting input part 23 allows the user to switch the settings of the power control law and the notification control law with respect to the detected results of dust. The user can select the setting of setting input part 23 so as to control the electric power to be supplied to electric blower 2 according to the sizes and amounts of the detected dusts, or to change the notification level to be provided to the user (the amount of dust at which the user is informed of it).

Electric vacuum cleaner 50 further includes suction tool setting parts 25 provided in each suction tool so as to indicate its type. Body 1 includes suction tool identification part 24 for identifying the connected suction tool from suction tool setting part 25. In the present embodiment, each suction tool setting part 25 is formed of a predetermined resistor and supplied with a predetermined current. This allows suction tool identification part 24 to identify the connected suction tool from the potential difference caused by the difference in the resistance value. The electric vacuum cleaner of the present invention, however, is not limited to this case. Suction tool identification part 24 has only to identify the connected suction tool from suction tool setting part 25 by having any transmitter and receiver.

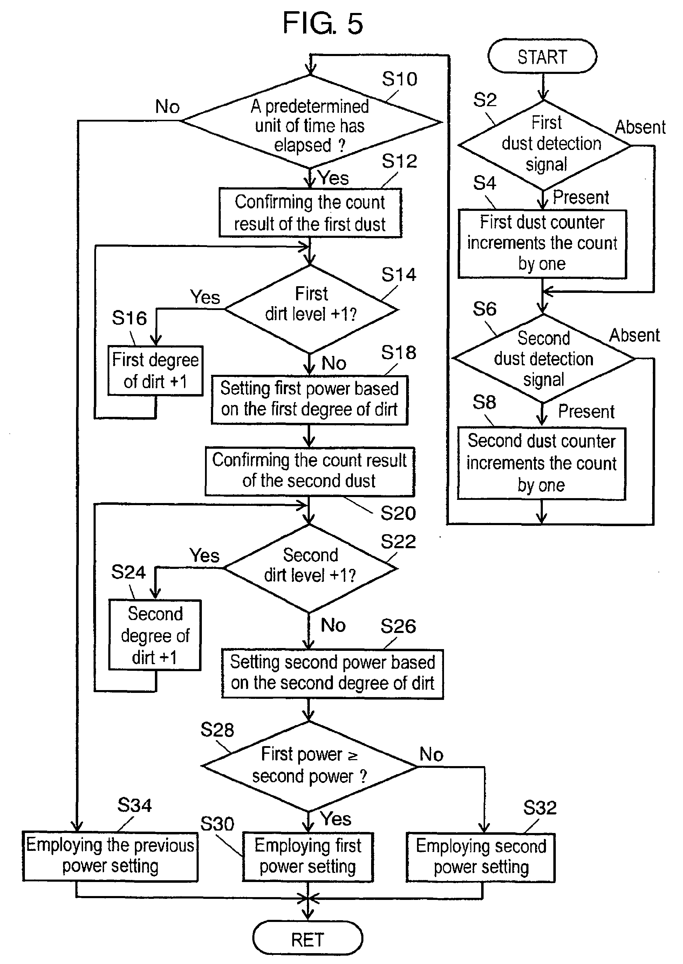

Electric vacuum cleaner 50 of the present embodiment operates as follows. Fig. 5 is a flowchart showing the control flow of electric vacuum cleaner 50.

First, the user connects the power cable (unillustrated) of body 1 to a commercial power supply (unillustrated), and then operates operating part 4 to start to operate electric vacuum cleaner 50. Then, operating part 4 transmits the operation signal to determination controller 9. In response to the user's operation, determination controller 9 transmits the driving signal to driver 8 so as to drive electric blower 2 at a predetermined initial value (for example 300 W). Driver 8 supplies a current to electric blower 2 in response to the received driving signal. Electric blower 2 starts to operate so as to generate suction power at the suction opening of the suction tool.

The dust suctioned by the suction power is collected in dust bag 5 of dust chamber 6 of body 1 through hose 3. At this moment, as shown in Fig. 3, the dust passes through the suction passage of collected dust detector 7. The passing of the dust between light emitter 28 and light receiver 29 changes the amount of light received by light receiver 29. The change in the amount of the received light depends on the size of the dust. In other words, the larger the dusts in size and number, the greater the change in the amount of the light received.

In dust detector 7, dust sensor 12 senses a signal indicating the change in the amount of light received by light receiver 29, and transmits the signal to first dust detector 10 and second dust detector 11.

In first dust detector 10, first amplifier-determiner 26 amplifies the received signal by the first amplification factor and when the result exceeds a predetermined threshold, outputs a first dust detection signal S2.

In dust amount sensor 15, when receives the first dust detection signal S2, first dust counter 13 increments the count by one (S4). When first dust counter 13 does not receive the first dust detection signal, the process goes to Step S6.

Next, in second dust detector 11, whether first dust detector 10 has outputted the first dust detection signal S2 or not, second amplifier-determiner 27 amplifies the received signal by a second amplification factor, and when the result exceeds a predetermined threshold, outputs a second dust detection signal S6.

The second amplification factor is set larger than the first amplification factor because of the following reasons. When the dust is comparatively large, the dust is detected at the first amplification factor, so that both the first and second dust detection signals are outputted. When the dust is comparatively small, the signal amplified by the first amplification factor does not reach the determination level (predetermined threshold). Then, the dust is detected when the signal is amplified by the second amplification factor, so that only the second dust detection signal is outputted. Providing a difference in the amplification factor in this manner makes it possible to distinguish the size of the dust. As a result, the difference in the output signal can be used to distinguish dusts that do not have a sufficient difference in pulse width (for example, dusts having diameters of 0.1 mm and 0.03 mm) because of having the same transit speed at light emitter 28 and light receiver 29 of dust sensor 12.

In dust amount sensor 15, when receives the second dust detection signal, second dust counter 14 increments the count by one (S8). When second dust counter 14 does not receive the second dust detection signal, the process goes to Step S10.

Next, in dust amount sensor 15, first dust counter 13 counts the first dust detection signal for a predetermined unit of time (S10), and second dust counter 14 counts the second dust detection signal for the predetermined unit of time (S10). These count results are transmitted to determination controller 9. Until the predetermined unit of time has elapsed (S10), determination controller 9 controls driver 8 to employ the previous power setting (S34).

Determination controller 9 confirms the count result of the dust detection signal of first dust counter 13 (S12), and determines the current degree of dirt of the surface to be cleaned as a first dirt level based on the relation between the amount of dust and the degree of dirt shown in Table 1. Later, the current dirt level is compared with the first dirt level. If the comparison indicates that the first dirt level should be changed (for example, be incremented by one), the first dirt level is changed (S14), and the first degree of dirt is changed (S16). On the other hand, when the comparison indicates that it is unnecessary to change the first dirt level, the process goes to Step S18.

Determination controller 9 controls driver 8 to set power from the value of the first degree of dirt based on the relation shown in Table 1 (S18).

Table 1 shows different power settings corresponding to the amounts of dusts obtained from the count results of the dust counters. More specifically, Table 1 includes the amounts of dusts obtained from the first and second dust detection signals, the values of the degrees of dirt, and power setting examples. Thus, Table 1 is a table showing the correspondence between the amounts of dusts of different sizes detected by the dust amount sensor and the electric power supplies to the electric blower.

**Table 1: power setting table based on the results of the dust detectors**

| | first dust count result | | second dust count result | |
|---|---|---|---|---|
| degree of dirt | the amount of dust | power setting example | the amount of dust | power setting example |
| 0 | 0-1 | initial value (300 W) | 0 - 5 | initial value (300 W) |
| 1 | 2 - 4 | +100 W | 6 - 12 | +80 W |
| 2 | 5 - 7 | +200 W | 13 - 25 | +150 W |
| 3 | 8 - 10 | +300 W | 26 - 40 | +200 W |
| 4 | 11 and over | +450 W | 41 and over | +300 W |

Next, determination controller 9 confirms the count result of the dust detection signal of second dust counter 14 (S20), and determines the current degree of dirt as a second dirt level based on the relation between the amount of dust and the degree of dirt shown in Table 1. Later, the current dirt level is compared with the second dirt level. If the comparison indicates that the second dirt level should be changed (for example, be incremented by one), the second dirt level is changed (S22), and the second degree of dirt is changed (S24). On the other hand, when the comparison indicates that it is unnecessary to change the second dirt level, the process goes to Step S26.

Determination controller 9 controls driver 8 to set power from the second degree of dirt based on the relation shown in Table 1 (S26).

As described above, determination controller 9 of the electric vacuum cleaner of the present embodiment determines each of the first degree of dirt and the second degree of dirt first, and then once sets the power setting corresponding to the amount of dust counted as shown in Table 1.

As shown in Table 1, the absolute value in the threshold range of the amount of dust obtained from the second dust count result is set larger than that of the amount of dust obtained from the first dust count result at the determination of the degree of dirt. This is because, in the present embodiment, the dust counted by second dust counter 14 is smaller in size and larger in number than the dust counted by first dust counter 13. In addition, the power setting value corresponding to the degree of dirt based on the second dust count result is set smaller than the power setting value corresponding to the degree of dirt based on the first dust count result. This is because the dust countered by second dust counter 14 can be suctioned at less power than the dust counted by first dust counter 13.

Determination controller 9 determines the larger of the power values as the electric power to be supplied to electric blower 2 from the power setting based on the count results of the first dust counter 13 and second dust counter 14. Determination controller 9 then transmits a control signal to driver 8 (S28, S30, S32). Driver 8 drives electric blower 2 according to the signal, thereby ensuring the suction of dust.

As described above, in the electric vacuum cleaner of the present embodiment, electric blower 2 is operated according to the amount and size of the dust, making the electric vacuum cleaner more energy efficient and user friendly.

The electric vacuum cleaner of the present embodiment further can display the calculated degree of dirt using detection indicator 20. Informing the user of the detection conditions of the dust (the amount of dust or the degree of dirt) allows the user to perform efficient cleaning according to the degree of dirt, that is, the cleanness of the surface to be cleaned.

The electric vacuum cleaner of the present embodiment further can detect the degree of dirt separately for small dust and large dust, thereby displaying the degree of dirt separately for small dust and large dust. This allows the user to recognize the size distribution of dust and to predict the accumulation of dust, thereby using the electric vacuum cleaner efficiently. Detection indicator 20 can provide audible or other indication instead of visual indication.

In the aforementioned case, the dust counted by first dust counter 13 is also counted (outputted) by second dust counter 14 at the same time. This is usually taken into consideration to set the relation shown in Table 1. Alternatively, however, first amplifier-determiner 26 and second amplifier-determiner 27 may have different circuit structures from each other so that only one of the first and second dust detection signals is outputted. This improves the efficiency of the communication circuit and reduces the cost. In this case, dust amount sensor 15 can be provided with the feature of automatically adding the first dust count result to the second dust count result so as to match the controls of first and second dust counters 13 and 14 regardless of the circuit structures of first and second amplifier-determiners 26 and 27.

Electric vacuum cleaner 50 may alternatively have a plurality of control laws (the voltage control law and the notification control law) and be provided with setting input part 23 as a slide switch on operating part 4 or at, for example, the top of body 1. This allows the user to select a desired operation based on the condition of the surface to be cleaned.

In general, the optimum setting for the power control law and the notification control law with respect to the amount and size of the dust differs depending on the environment of using the electric vacuum cleaner. The environment can be a space where people move around a lot, a space used for sleeping purposes only, or a small space used for specialized purposes. In a space used for sleeping purposes only, large dust is not generated so often and high cleanness is required. On the other hand, in a space where people move around a lot, or a small space used for specialized purposes, it is the main purpose to vacuum dust having a certain degree of size. Therefore, the electric vacuum cleaner becomes more useful by being provided with setting input part 23, which allows the user to change the setting according to the environment where the electric vacuum cleaner is used.

In electric vacuum cleaner 50, different resistors as suction tool setting parts 25 can be provided to different suction tools for cleaning futon (thick bed quilt), clothes, hard-to-reach areas and the like. Suction tool setting parts 25 are supplied with a predetermined current through hose 3 or the like. Suction tool identification part 24 identifies the connected suction tool from the potential difference so as to switch the control.

For example, the suction tool for cleaning clothes can be set to inform the user of the amount of dust in minute detail and to be supplied with a low electric power so as not to damage clothes by too strong suction power. The suction tools for cleaning futon and hard-to-reach areas may be supplied with a high electric power so as to have sufficient suction power, and the power control law and the notification control law may be automatically switched. This makes the electric vacuum cleaner more user friendly. When a suction tool is multipurpose, the setting (for example, resultant resistance) of suction tool setting part 25 can be switched as its use changes, making the electric vacuum cleaner more user friendly.

In electric vacuum cleaner 50, determination controller 9 can determine the amount of dust collected in dust bag 5 from the count results of first dust counter 13 and second dust counter 14. In other words, determination controller 9 can determine the amount of dust collected while considering the size. This means that determination controller 9 can determine the amount of dust more precisely than the conventional vacuum cleaners and make dust amount indicator 21 inform the user of the amount of dust collected.

When the user replaces dust bag 5, accumulation clear input part 22 transmits a signal to determination controller 9 so as to reset the amount of dust. Accumulation clear input part 22 can be an input part made of a switch to be operated by the user. Alternatively, accumulation clear input part 22 can be reset automatically by determination controller 9 by providing a switch, a sensor, or the like in dust chamber 6 and detecting the replacement of dust bag 5.

### SECOND EMBODIMENT

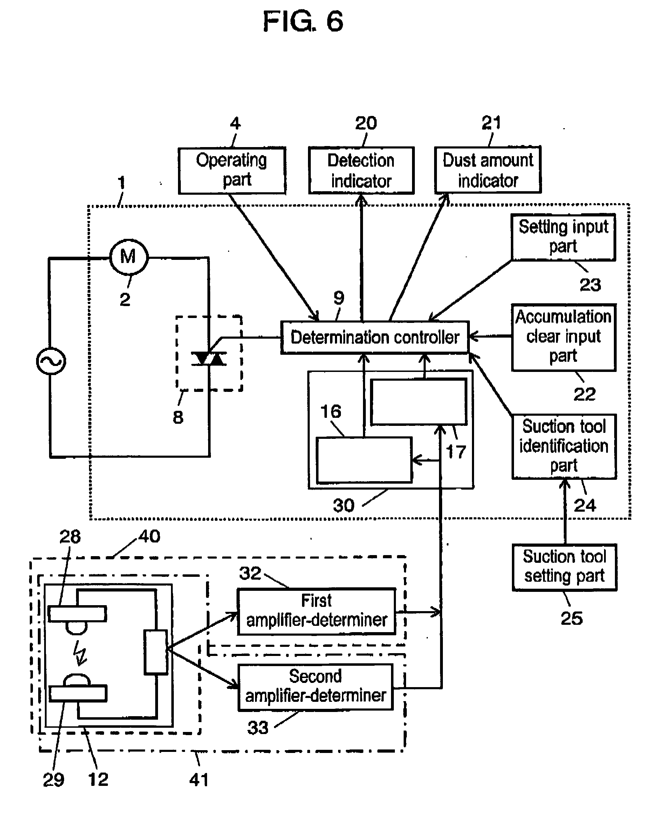

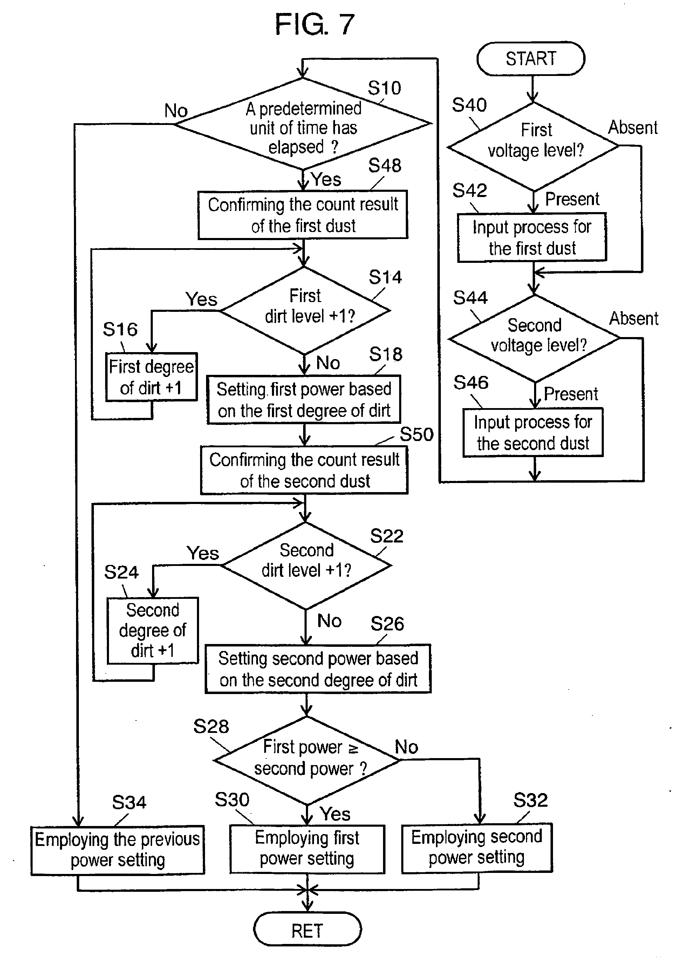

A second embodiment of the present invention is described as follows with reference to drawings. Fig. 6 is a block diagram showing the control system of electric vacuum cleaner 60 according to the second embodiment. Fig. 7 is a flowchart showing an example of the dust detection signal processing of electric vacuum cleaner 60.

In the present embodiment, like components are labeled with like reference numerals with respect to the first embodiment, and the description of these components is not repeated.

Electric vacuum cleaner 60 includes first dust detector 40 having first amplifier-determiner 32 and second dust detector 41 having second amplifier-determiner 33. First dust detector 40 and second dust detector 41 are each composed of a transistor and one of a Zener diode and a resistor. First and second dust detectors 40 and 41 output signals whose voltages are changed to a plurality of voltage levels, thereby transmitting them as detection signals to dust amount sensor 30.

Body 1 includes dust amount sensor 30 having first voltage detector 16 and second voltage detector 17, which detect the amount of dust based on the voltage level of the signal received, instead of counting the pulse signals as in the first embodiment.

Electric vacuum cleaner 60 of the present embodiment operates as follows. The output voltage in the case where first dust detector 40 detects dust, and the output voltage in the case where second dust detector 41 detects dust are determined in advance. Then, in first dust detector 40, first amplifier-determiner 32 amplifies the received signal by first amplification factor, and when the result exceeds a predetermined threshold, outputs a first voltage level signal S40.

In dust amount sensor 30, first voltage detector 16 receives the first voltage level signal (S42). When first voltage detector 16 does not receive the first voltage level signal, the process goes to Step S44.

Next, in second dust detector 41, whether first voltage detector 16 has outputted the first voltage level signal or not, second amplifier-determiner 33 amplifies the received signal by a second amplification factor, and when the result exceeds a predetermined threshold, outputs a second voltage level signal S44.

The relation between the first amplification factor and the second amplification factor is the same as in the first embodiment.

In dust amount sensor 30, second voltage detector 17 receives the second voltage level signal (S46). When second voltage detector 17 does not receive the second voltage level signal, the process goes to Step S10.

Next, in dust amount sensor 30, first voltage detector 16 counts the first voltage level signal for a predetermined unit of time, and second voltage detector 17 counts the second voltage level signal for the predetermined unit of time. These count results are transmitted to determination controller 9 (S10, S48, S50).

In the present embodiment, first voltage detector 16 and second voltage detector 17 in dust amount sensor 30 individually perform detection and inform determination controller 9 of the detected result as shown in Fig. 7. When large dust is detected, it is possible to make determination controller 9 consider that small dust is also detected and to process the small dust. Alternatively, the detected result of voltage output can be time-shared to make first voltage detector 16 and second voltage detector 17 perform detection at different timings.

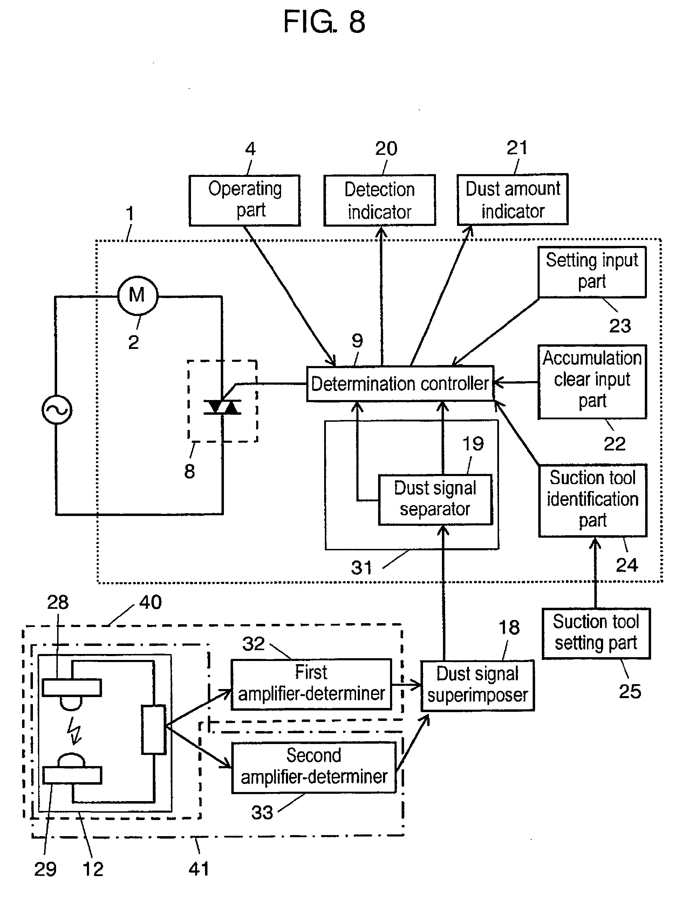

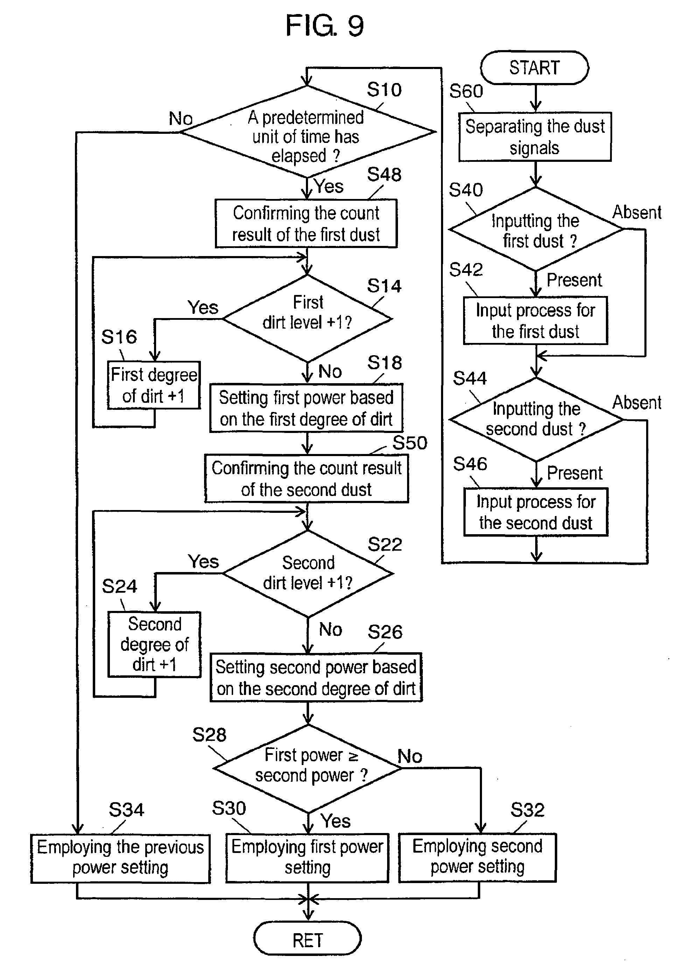

Figs. 8 and 9 show another example of the electric vacuum cleaner of the present embodiment. Fig. 8 is a block diagram showing the control system of electric vacuum cleaner 70. Fig. 9 is a flowchart showing an example of the dust detection signal processing of electric vacuum cleaner 70.

In this example, as shown in Fig. 8, the output of first dust detector 40 and the output of second dust detector 41 are once superimposed by dust signal superimposer 18 by a predetermined communication law. Then, dust signal separator 19, which is included in dust amount sensor 31, is used to detect whether a detection signal has been received from one or both of first and second dust detectors 40 and 41, based on the process of superimposing.

As an example of this operation, dust signal superimposer 18 transmits the output as a signal pulse obtained by being time-shared or divided into several frequency bands and then superimposed with each other from the standard timing. Then, dust signal separator 19 of dust amount sensor 31 receives the signal pulse, determines their outputs, and transmits them to determination controller 9 (S60). It is possible in this structure to increase the amount of information by, for example, using wireless communication for control. The control flow hereafter is not described here because it is equal to the flow shown in Fig. 7.

Suction tool identification part 24 can identify the connected suction tool by any method from suction tool setting part 25. Therefore, dust signal superimposer 18 and dust signal separator 19 can be communicated via wireless, infrared or other means. In that case, the signal indicating the detection of dust and the signal identifying the suction tool can be transmitted after being superimposed. This allows efficient processing such as the notification of the detection of the suction tool and the notification of the amount of dust, thereby making the vacuum cleaner easy to use.

In the above-described embodiments 1 and 2, dust amount sensors 15, 30, 31 can detect the amounts of two types of dust; however, the present invention is not limited to this case. For example, the dust can be divided into a larger number of size groups depending on the purpose of its use, frequency characteristics or the like. Alternatively, it is possible to use a larger number of dust detection signals to improve detection accuracy. In this case, with the same basic flow, the power control of electric blower 2 and the notification control of detection indicator 20 can be performed by providing the necessary number of power control laws and notification control laws to distinguish dust detection signals, and providing control laws to collaboratively determine these power control laws and notification control laws. For example, it is possible to use the control setting corresponding to the amount of dust of the size most detected or to use the control setting with the highest voltage of the voltage settings corresponding to the amount of dust detected.

As described hereinbefore, the electric vacuum cleaner of the present invention can control dust based on the plurality of detection signals whose characteristics are conformed to the sizes of the dusts. This provides accurate power control and high usability.

### INDUSTRIAL APPLICABILITY

As described hereinbefore, the electric vacuum cleaner of the present invention is ideal for household use because of its advantage of controlling dusts of different sizes with high accuracy.

## Claims

1. An electric vacuum cleaner (50, 60, 70) comprising:
an electric blower (2);
a driver (8) for driving the electric blower (2);
a determination controller (9) for controlling electric power supply to the electric blower (2) by transmitting a signal to the driver (8); and
a dust amount sensor (15, 30, 31) for sensing amounts of dusts of different sizes, wherein
the determination controller (9) controls the electric power supply to the electric blower (2) based on the amounts of dusts of the different sizes detected by the dust amount sensor (15, 30, 31),
**characterized in** further comprising:
a first dust detector (10) for detecting dust of a predetermined size in a suction passage,
a second dust detector (11) for detecting dust smaller than the predetermined size in the suction passage, and
a dust sensor (12) for sensing dust in the suction passage and outputting a signal; wherein
the first dust detector (10) and the second dust detector (11) share the dust sensor (12), the first dust detector (10) includes a first amplifier-determiner (26, 32), the second dust detector (11) includes a second amplifier-determiner (27, 33), and the dust sensor (12) transmits a signal to the first amplifier-determiner (26, 32) and the second amplifier-determiner (27, 33); and wherein
the dust amount sensor (15, 30, 31) senses the amounts of dusts of the different sizes based on detection results of the first dust detector (10) and the second dust detector (11).

2. The electric vacuum cleaner of claim 1, wherein
the determination controller(9) controls the electric power supply to the electric blower (2) based on a table containing the amounts of dusts of the different sizes detected by the dust amount sensor (15, 30, 31) and a correspondence between the amounts of dusts and the electric power supply to the electric blower (2).

3. The electric vacuum cleaner of claim 2, wherein
the determination controller (9) compares electric power supplies corresponding to the amounts of dusts of the different sizes, and determines the larger of the electric power supplies as an electric power supply to be supplied to the electric blower (2).

4. The electric vacuum cleaner of claim 1, wherein
the first amplifier-determiner (26, 32) amplifies a signal outputted from the dust sensor (12) by a first amplification factor, and when a magnitude of the signal amplified is greater than a predetermined threshold, determines that the dust of the predetermined size has been detected; and
the second amplifier-determiner (27, 33) amplifies a signal outputted from the dust sensor (12) by a second amplification factor, and when a magnitude of the signal amplified is greater than the predetermined threshold, determines that dust smaller than the predetermined size has been detected, and
the second amplification factor is larger than the first amplification factor.

5. The electric vacuum cleaner of claim 4, wherein
the dust amount sensor (15, 30, 31) senses the amounts of dusts of the different sizes by counting results of the first dust detector (10) and the second dust detector (11).

6. The electric vacuum cleaner of claim 4, wherein
the first dust detector (10) and the second dust detector (11) output voltages different from each other when detecting dust, and
the dust amount sensor (15,30,31) senses the amounts of dusts of the different sizes based on the difference in output voltages of the first dust detector (10) and the second dust detector (11).

7. The electric vacuum cleaner of claim 6, further comprising:
a dust signal superimposer (18) for superimposing outputs of the first dust detector (10) and the second dust detector (11); and
a dust signal separator (19) for separating the signals superimposed by the dust signal superimposer (18).

8. The electric vacuum cleaner of claim 1, further comprising a dust amount indicator (21), wherein
the determination controller (9) determines the amount of dust collected with consideration of the size of the dust collected, based on the amounts of dusts of the different sizes and
the dust amount indicator (21) informs the user of the amount of dust collected determined by the determination controller (9).

9. The electric vacuum cleaner of claim 8, further comprising an accumulation clear part (22) for resetting the amount of dust collected.

10. The electric vacuum cleaner of claim 9, wherein
the accumulation clear part (22) resets the amount of dust collected when a dust bag is replaced.

11. The electric vacuum cleaner of claim 1, further comprising a detection indicator (20) for informing the user of the amounts of dusts of the different sizes detected by the dust amount sensor (15, 30, 31).

12. The electric vacuum cleaner of claim 11, wherein
the determination controller (9) determines at least one of power control law of the electric blower and notification control law of the detection indicator (20) based on the amounts of dusts of the different sizes.

13. The electric vacuum cleaner of claim 12, further comprising a setting input part (23) for setting at least one of the power control law and the notification control law.

14. The electric vacuum cleaner of claim 12, further comprising a suction tool
identification part (24) for identifying a type of a connected suction tool, wherein
the determination controller (9) determines the at least one of the power control law and the notification control law based on the type of the suction tool.

15. The electric vacuum cleaner of claim 14, wherein
the suction tool identification part (24) identifies the type of the connected suction tool from a potential difference caused by supplying a predetermined current in accordance with a resistance value different depending on the type of the suction tool.

## Patentansprüche

1. Elektrischer Staubsauger (50, 60, 70), umfassend:
ein elektrisches Gebläse (2);
einen Antrieb (8) zum Antreiben des elektrischen Gebläses (2);
eine Bestimmungssteuerung (9) zum Steuern der Zufuhr von elektrischem Strom an das elektrische Gebläse (2) durch Übertragen eines Signals an den Antrieb (8) ;
einen Staubmengensensor (15, 30, 31) zum Abfühlen von Mengen von Staub mit verschiedener Größe, wobei
die Bestimmungssteuerung (9) die Zufuhr von elektrischem Strom an das Gebläse (2) auf Grundlage der Mengen von Staub mit der verschiedenen Größe steuert, die durch den Staubmengensensor (15, 30, 31) erkannt sind,
**dadurch gekennzeichnet, dass** er ferner Folgendes umfasst:
einen ersten Staubdetektor (10) zum Erkennen von Staub mit einer vorgegebenen Größe in einem Saugdurchgang,
einen zweiten Staubdetektor (11) zum Erkennen von Staub, der kleiner als die vorgegebene Größe ist, in dem Saugdurchgang, und
einen Staubsensor (12) zum Abfühlen von Staub in dem Saugdurchgang und Ausgeben eines Signals; wobei
sich der erste Staubdetektor (10) und der zweite Staubdetektor (11) den Staubsensor (12) teilen, der erste Staubdetektor (10) eine erste Verstärker-Bestimmungsvorrichtung (26, 32) enthält, der zweite Staubdetektor (11) eine zweite Verstärker-Bestimmungsvorrichtung (27, 33) enthält und der Staubsensor (12) ein Signal an die erste Verstärker-Bestimmungsvorrichtung (26, 32) und die zweite Verstärker-Bestimmungsvorrichtung (27, 33) überträgt; und wobei
der Staubmengensensor (15, 30, 31) die Mengen von Staub mit verschiedener Größe auf Grundlage von Erkennungsergebnissen des ersten Staubdetektors (10) und des zweiten Staubdetektors (11) abfühlt.

2. Elektrischer Staubsauger nach Anspruch 1, wobei die Bestimmungssteuerung (9) die Zufuhr von elektrischem Strom an das elektrische Gebläse (2) auf Grundlage einer Tabelle, die die Mengen von Staub mit verschiedener Größe enthält, welche durch den Staubmengensensor (15, 30, 31) erkannt sind, und einer Entsprechung zwischen den Mengen von Staub und der Zufuhr von elektrischem Strom an das Gebläse (2) steuert.

3. Elektrischer Staubsauger nach Anspruch 2, wobei die Bestimmungssteuerung (9) Zufuhren von elektrischem Strom entsprechend den Mengen von Staub mit der verschiedenen Größe vergleicht und die größere der Zufuhren von elektrischem Strom als eine Zufuhr von elektrischem Strom bestimmt, die dem elektrischen Gebläse (2) zugeführt werden soll.

4. Elektrischer Staubsauger nach Anspruch 1, wobei
die erste Verstärker-Bestimmungsvorrichtung (26, 32) ein Signal, das von dem Staubsensor (12) ausgegeben ist, um einen ersten Verstärkungsfaktor verstärkt und, wenn eine Größenordnung des verstärkten Signals größer als eine vorgegebene Schwelle ist, bestimmt, dass der Staub der vorgegebenen Größe erkannt wurde; und
die zweite Verstärker-Bestimmungsvorrichtung (27, 33) ein Signal, das von dem Staubsensor (12) ausgegeben ist, um einen zweiten Verstärkungsfaktor verstärkt und, wenn eine Größenordnung des verstärkten Signals größer als eine vorgegebene Schwelle ist, bestimmt, dass Staub, der kleiner als die vorgegebene Größe ist, erkannt wurde, und
der zweite Verstärkungsfaktor größer als der erste Verstärkungsfaktor ist.

5. Elektrischer Staubsauger nach Anspruch 4, wobei der Staubmengonsensor (15, 30, 31) die Mengen von Staub mit der verschiedenen Größe durch Zählen von Ergebnissen des ersten Staubdetektors (10) und des zweiten Staubdetektors (11) abfühlt.

6. Elektrischer Staubsauger nach Anspruch 4, wobei
der erste Staubdetektor (10) und der zweite Staubdetektor (11) beim Erkenn von Staub Spannungen abgeben, die voneinander abweichen, und
der Staubmengensensor (15, 30, 31) die Mengen von Staub mit der verschiedenen Größe auf Grundlage der Differenz der abgegebenen Spannungen des ersten Staubdetektors (10) und des zweiten Staubdetektors (11) abfühlt.

7. Elektrischer Staubsauger nach Anspruch 6, ferner umfassend:
eine Staubsignalüberlagerungsvorrichtung (18) zum Überlagern von Abgaben des ersten Staubdetektors (10) und des zweiten Staubdetektors (11); und
einen Staubsignalseparator (19) zum Trennen der Signale, die durch die Staubsignalüberlagerungsvorrichtung (18) überlagert sind.

8. Elektrischer Staubsauger nach Anspruch 1, ferner umfassend eine Staubmengenanzeige (21), wobei
die Bestimmungssteuerung (9) die Menge von gesammeltem Staub hinsichtlich der Größe des gesammelten Staubs auf Grundlage der Mengen von Staub mit der verschiedenen Größe bestimmt und
die Staubmengenanzeige (21) den Benutzer über die Menge von angesammeltem Staub, die durch die Bestimmungssteuerung (9) bestimmt ist, informiert.

9. Elektrischer Staubsauger nach Anspruch 9, ferner umfassend ein Ansammlungslöschteil (22) zum Zurücksetzen der Menge von angesammeltem Staub.

10. Elektrischer Staubsauger nach Anspruch 9, wobei das Ansammlungslöschteil (22) die Menge von angesammeltem Staub zurücksetzt, wenn ein Staubbeutel ausgetauscht ist.

11. Elektrischer Staubsauger nach Anspruch 1, ferner umfassend eine Erkennungsanzeige (20) zum Informieren des Benutzers über die Mengen von Staub mit den verschiedenen Größen, die durch den Staubmengensensor (15, 30, 31) erkannt sind.

12. Elektrischer Staubsauger nach Anspruch 11, wobei die Bestimmungssteuerung (9) zumindest eines eines Stromsteuersatzes des elektrischen Gebläses und Meldesteuernatzes der Erkennungsanzeige (20) auf Grundlage der Mengen von Staub mit den verschiedenen Größen bestimmt.

13. Elektrischer Staubsauger nach Anspruch 12, ferner umfassend ein Einstellungseingabeteil (23) zum Einstellen von zumindest einem des Stromsteuersatzes und des Meldesteuersatzes.

14. Elektrischer Staubsauger nach Anspruch 12, ferner umfassend ein Saugwerkzeugidentifikationsteil (24) zum Identifizieren einer Art eines angeschlossenen Saugwerkzeugs, wobei
die Bestimmungssteuerung (9) den zumindest einen des Stromsteuersatzes und des Meldesteuersatzes auf Grundlage der Art des Saugwerkzeugs bestimmt.

15. Elektrischer Staubsauger nach Anspruch 14, wobei
das Saugwerkzeugidentifilcationsteil (24) die Art des angeschlossenen Saugwerkzeugs aus einer Potentialdifferenz identifiziert, die durch Zuführen eines vorgegebenen Stroms gemäß einem Widerstandswert bewirkt ist, der abhängig von der Art des Saugwerkzeugs abweicht.

## Revendications

1. Aspirateur électrique (50, 60, 70) comprenant :
une soufflante électrique (2) ;
une unité d'entraînement (8) destinée à entraîner la soufflante électrique (2) ;
une unité de commande de détermination (9) destinée à commander l'alimentation de puissance électrique à la soufflante électrique (2) en transmettant un signal à l'unité d'entraînement (8) ; et
un détecteur de quantité de poussière (15, 30, 31) destiné à détecter des quantités de poussières de tailles différentes, ou
l'unité de commande de détermination (9) commande l'alimentation de puissance électrique à la soufflante électrique (2) sur la base des quantités de poussières de tailles différentes détectées par le détecteur de quantité de poussière (15, 30, 31),
**caractérisé en ce qu'**il comprend en outre :
un premier détecteur de poussière (10) destiné à détecter la poussière d'une taille prédéterminée dans un passage d'aspiration,
un deuxième détecteur de poussière (11) destiné à détecter la poussière dont la taille est inférieure à la taille prédéterminée dans le passage d'aspiration, et
un détecteur de poussière (12) destiné à détecter la poussière dans le passage d'aspiration et à émettre un signal, où
le premier détecteur de poussière (10) et le deuxième détecteur de poussière (11) partagent le détecteur de poussière (12), le premier détecteur de poussière (10) comporte une première unité d'amplification et de détermination (26, 32), le deuxième détecteur de poussière (11) comporte une deuxième unité d'amplification et de détermination (27, 33), et le détecteur de poussière (12) transmet un signal à la première unité d'amplification et de détermination (26, 32) et à la deuxième unité d'amplification et de détermination (27, 33) ; et, où
le détecteur de quantité de poussière (15, 30, 31) détecte les quantités de poussières de différentes tailles sur la base des résultats de détection du premier détecteur de poussière (10) et du deuxième détecteur de poussière (11).

2. Aspirateur électrique de la revendication 1, où l'unité de commande de détermination (9) commande l'alimentation de puissance électrique à la soufflante électrique (2) en se basant sur une table contenant les quantités de poussières de tailles différentes détectées par le détecteur de quantité de poussière (15, 30, 31) et une correspondance entre les quantités de poussières et l'alimentation de puissance électrique à la soufflante électrique (2).

3. Aspirateur électrique de la revendication 2, où l'unité de commande de détermination (9) compare des alimentations de puissances électriques correspondant aux quantités de poussières des différentes tailles, et détermine la puissance électrique la plus importante en tant que puissance électrique devant être fournie à la soufflante électrique (2).

4. Aspirateur électrique de la revendication 1, où
la première unité d'amplification et de détermination (26, 32) amplifie un signal émis par le détecteur de poussière (12) par un premier facteur d'amplification, et lorsqu'une amplitude du signal amplifié est supérieure à un seuil prédéterminé, détermine que la poussière de la taille prédéterminée a été détectée ; et
la deuxième unité d'amplification et de détermination (27, 33) amplifie un signal émis par le détecteur de poussière (12) par un deuxième facteur d'amplification, et lorsqu'une amplitude du signal amplifié est supérieure au seuil prédéterminé, détermine que la poussière de taille inférieure à la taille prédéterminée a été détectée, et
le deuxième facteur d'amplification est supérieur au premier facteur d'amplification.

5. Aspirateur électrique de la revendication 4, où
le détecteur de quantité de poussière (15, 30, 31) détecte les quantités de poussières de différentes tailles en calculant les résultats du premier détecteur de poussière (10) et du deuxième détecteur de poussière (11).

6. Aspirateur électrique de la revendication 4, où
le premier détecteur de poussière (10) et le deuxième détecteur de poussière (11) délivrent en sortie des tensions différentes l'une de l'autre lors de la détection de la poussière, et
le détecteur de quantité de poussière (15, 30, 31) détecte des quantités de poussières de différentes tailles sur la base de la différence des tensions délivrées en sortie du premier détecteur de poussière (10) et du deuxième détecteur de poussière (11).

7. Aspirateur électrique de la revendication 6, comprenant en outre :
un dispositif de superposition (18) de signal de poussière destiné à superposer des sorties du premier détecteur de poussière (10) et du deuxième détecteur de poussière (11) ; et
un séparateur (19) de signal de poussière destiné à séparer les signaux superposés par le dispositif de superposition (18) de signal de poussière.

8. Aspirateur électrique de la revendication 1, comprenant en outre un indicateur de quantité de poussière (21), où
l'unité de commande de détermination (9) détermine la quantité de poussière recueillie en tenant compte de la taille de la poussière recueillie, sur la base des quantités de poussières de tailles différentes, et
l'indicateur de quantité de poussière (21) informe l'utilisateur de la quantité de poussière recueillie déterminée par l'unité de commande de détermination (9).

9. Aspirateur électrique de la revendication 8, comprenant en outre une partie de suppression d'accumulation (22) pour réinitialiser la quantité de poussière recueillie.

10. Aspirateur électrique de la revendication 9, où
la partie de suppression d'accumulation (22) réinitialise la quantité de poussière recueillie lorsqu'un sac poussière est remplacé.

11. Aspirateur électrique de la revendication 1, comprenant en outre un indicateur de détection (20) pour informer l'utilisateur des quantités de poussières de différentes tailles détectées par le détecteur de quantité de poussière (15, 30, 31).

12. Aspirateur électrique de la revendication 11, où
l'unité de commande de détermination (9) détermine au moins l'une d'une loi de régulation d'alimentation de la soufflante électrique, et d'une loi de commande de notification de l'indicateur de détection (20) sur la base des quantités de poussières des différentes tailles.

13. Aspirateur électrique de la revendication 12, comprenant en outre une partie d'entrée de réglage (23) destinée à régler au moins l'une de la loi de régulation d'alimentation et de la loi de commande de notification.

14. Aspirateur électrique de la revendication 12, comprenant en outre une partie (24) d'identification d'outil d'aspiration destinée à identifier un type d'un outil d'aspiration connecté, où
l'unité de commande de détermination (9) détermine l'au moins une de la loi de régulation d'alimentation et de la loi de commande de notification sur la base du type de l'outil d'aspiration.

15. Aspirateur électrique de la revendication 14, où la partie (24) d'identification d'outil d'aspiration identifie le type de l'outil d'aspiration connecté à partir d'une différence entraînée par l'alimentation d'un courant prédéterminé en conformité avec une valeur de résistance différente selon le type de l'outil d'aspiration.
